# EUROPEAN PATENT SPECIFICATION

(11) **EP 3 708 910 B1**
(45) Date of publication and mention of the grant of the patent: **22.02.2023**
(21) Application number: 19162571.4
(22) Date of filing: 13.03.2019
(51) Int. Cl.: F23J 3/02, F24H 1/28, F28G 1/12, F28G 13/00, F28F 27/02, F28F 19/00, F23J 15/06

(54) **BOILER**
KESSEL
CHAUDIÈRE

(43) Date of publication of application: 16.09.2020
(73) Proprietor: Alfa Laval Corporate AB, 221 00 Lund (SE)
(72) Inventor: RASMUSSEN, Henrik, DK-8920 RANDERS NV (DK); MARONIE, Kenneth, DK-8930 RANDERS (DK)
(74) Representative: Alfa Laval Attorneys

(56) References cited:
- WO-A1-2006/135145
- DE-B1- 2 822 623
- US-A- 4 124 065
- US-A- 4 595 050

## Description

### Technical field

The invention relates to boiler comprising a first number of tubes for conveying exhaust gas, each of the tubes comprising an inlet for receiving the exhaust gas and an outlet for discharging the exhaust gas and each of the tubes defining a respective longitudinal center axis.

### Background art

Boilers are well-known and used in many different heat exchange applications. A known boiler, used after e.g. an oil-fired burner, comprises a closed vessel and a number of tubes extending along each other inside the vessel. The exhaust or flue gas from the burner is fed through the tubes, and a medium, such as water, is fed through the vessel and thus around the tubes, whereby heat is transferred from the exhaust gas to the medium in the vessel. When the exhaust gas flows through the tubes, deposits containing soot are formed on the inside surfaces of the tubes. These deposits impair the heat transfer between the exhaust gas and the medium around the tubes resulting in a reduced boiler thermal efficiency and an increased burner fuel consumption. Further, the deposits also cause corrosion of the tubes. Consequently, regular manual cleaning of the tubes to remove the deposits is required which is cumbersome and time demanding. Also, to enable such cleaning of the tubes, the boiler must be shut down.

WO2006/135145 discloses a hot water boiler according to the preamble of claim 1 comprising tubes arranged to convey hot gases from a burner through a hot water chamber to heat water accommodated therein.

US4595050 discloses a tube-type heat exchanger comprising tubes arranged to convey a fluid through a housing for heat exchange with another fluid fed through the housing, which tubes enclose cleaning elements.

US4124065 discloses heat exchanger tubes enclosing cleaning elements.

DE2822623 discloses a tube-type heat exchanger comprising tubes enclosing cleaning elements.

### Summary

An object of the present invention is to provide a boiler that at least partly solves the problems above. More particularly, an object of the invention is to provide a boiler demanding less manual cleaning to remain thermally efficient, which may reduce the down-time of the boiler. The basic concept of the invention is to provide the boiler with means for decreasing the production of deposits inside the tubes, which means may be retrofitted, i.e. installed in existing boilers. The boiler for achieving the object above is defined in the appended claims and discussed below.

A boiler according to the present invention comprises a first number of tubes for conveying exhaust gas. Each of the tubes comprises an inlet for receiving the exhaust gas and an outlet for discharging the exhaust gas. Each of the tubes defines a respective longitudinal center axis. The boiler is characterized in that it further comprises a second number of deposit reducing elements. Each of the deposit reducing elements is arranged to close or block at least one of the tubes and prevent passage of exhaust gas through said at least one of the tubes, or be moved, by a sufficiently high exhaust gas pressure in said at least one of the tubes, to open said at least one of the tubes and allow passage of exhaust gas having a sufficiently high exhaust gas pressure through said at least one of the tubes, to increase an exhaust gas velocity in the open tubes and thereby reduce formation of deposits inside the tubes.

Thus, depending on the exhaust gas pressure in each of the tubes, a tube may be either closed by the corresponding deposit reducing element so as to prevent exhaust gas passage through the tube, or open so as to allow exhaust gas passage through the tube. A tube may be partly blocked by a deposit reducing element but still allow exhaust gas passage and thus be considered to be open.

When the boiler is not operated and the exhaust gas pressure is zero, the deposit reducing elements are arranged in their default positions closing the corresponding tubes. When the exhaust gas pressure increases, some of the deposit reducing elements may be moved from their default positions by the exhaust gas pressure and the corresponding tubes may be open, while other ones of the tubes may be closed. Typically, the higher the total exhaust gas pressure is, the more of the tubes will be open. By closing some of the tubes at lower exhaust gas pressures, the exhaust gas pressure and velocity in the open tubes may be relatively high. A high exhaust gas velocity through a tube decreases the formation of deposits inside the tube.

The deposit reducing elements may be arranged either inside or outside the tubes.

The exhaust gas may originate from different sources, such as a burner, and the deposits typically contain soot.

The first number, just like the second number, may vary, and the first and second numbers may, or may not, be the same. Further, the tubes may, or may not, have a similar design. Similarly, the deposit reducing elements may, or may not, have a similar design.

The tubes may have any suitable cross section, such as a circular cross section.

The longitudinal center axes of the tubes may extend parallel to each other.

As mentioned above, all the deposit reducing elements may, or may not, have a similar design. According to one embodiment of the inventive boiler, a first subset of the deposit reducing elements containing at least one of the deposit reducing elements differ from a second subset of the deposit reducing elements containing at least one of the deposit reducing elements. Further, a first exhaust gas pressure required for moving said at least one of the deposit reducing elements of the first subset is less than a second exhaust gas pressure required for moving said at least one of the deposit reducing elements of the second subset. There may be more than two deposit reducing element subsets having different characteristics. The number of deposit reducing elements per subsets may be one or more. This embodiment means that the one or more characteristics differing between the subsets may determine whether a certain one of the deposit reducing elements is moved or not at a certain total exhaust gas pressure. Thus, at a lower total exhaust gas pressure, the deposit reducing elements of the first subset may be moved, while at a higher total exhaust gas pressure, the deposit reducing elements of the first and second subsets may be moved.

The one or more characteristics differing between the subsets may be different. As an example, a differing characteristic may be the shape of the deposit reducing elements. According to one embodiment of the inventive boiler, a weight of said at least one of the deposit reducing elements in the first subset is less than a weight of said at least one of the deposit reducing elements in the second subset. Such a design enables a relatively straightforward mechanical construction and operation of the boiler.

The boiler may be so constructed that said first number of tubes is larger than said second number of deposit reducing elements. This embodiment may mean that only some of the tubes are associated with a deposit reducing element, i.e. that one or more of the tubes are constantly open. Thereby, it may be ensured that no build-up of exhaust gas inside the boiler takes place. This embodiment may also mean that more than one of the tubes are associated with one and the same of the deposit reducing elements.

The deposit reducing elements may have many different designs, such as conical, spherical, etc., naturally depending on the design of the tubes. According to one embodiment, the boiler is so designed that each of the deposit reducing elements includes a disc comprising two opposing plane surfaces, which surfaces are arranged to extend essentially perpendicular to the longitudinal center axis of said at least one of the tubes when the deposit reducing element closes said at least one of the tubes. Such discs may be relatively straightforward to manufacture and use for the desired purpose.

The boiler may further comprise a third number of guiding elements arranged to engage with said deposit reducing elements to control their movement in relation to said tubes. The deposit reducing elements move in relation to the tubes to open and close the same and the guiding elements are arranged to control this movement. The guiding elements may also make sure that the deposit reducing elements are not disconnected from the rest of the boiler. There may be one or more guiding elements engaging with one and the same of the deposit reducing elements. The guiding elements may extend through recesses or holes in the deposit reducing elements and parallel to the longitudinal center axes of the tubes.

The boiler may be so configured that each of said deposit reducing elements is arranged to at least partly cover the respective outlet of said at least one of the tubes to close said at least one of the tubes. Thus, according to this embodiment the deposit reducing elements are arranged outside the tubes and arranged to at least partly cover one or more of the tube outlets. This embodiment enables a robust and reliable design of the boiler.

The boiler may be so constructed that some of the tubes are arranged to be only partially covered by the deposit reducing elements. These tubes may then be constantly open. Thereby, it may be ensured that no build-up of exhaust gas inside the boiler takes place.

Alternatively, the boiler may be so configured that each of the deposit reducing elements is arranged in a respective one of the tubes. Further, each of the deposit reducing elements is arranged to be moved along the longitudinal center axis of said respective one of the tubes to open or close the tube.

Each of the deposit reducing elements may be arranged to scrape off deposits from an inside surface of said respective one of the tubes when it is moved along the longitudinal center axis of said respective one of the tubes. Thereby, automatic cleaning of said respective one of the boiler tubes during operation of the boiler may be enabled.

In a case where each of the deposit reducing elements includes a disc as discussed above, each of the discs may be so designed that a peripheral surface extending between its two opposing plane surfaces comprises at least one annular groove extending essentially parallel to its two opposing plane surfaces. There may be one, or more than one, for example two, such grooves in each of the discs. These grooves enable a relatively large thickness of the discs but still a relatively small tube contact surface, which may reduce the friction when the discs move through the tubes.

The tubes containing the deposit reducing elements may comprise a first section including the inlet for receiving the exhaust gas and a second section including the outlet for discharging the exhaust gas, wherein the second section further includes first retaining means for preventing the deposit reducing element from leaving the tube.

The first and second sections of the tubes may, or may not, be integrally formed. Further, the first and second sections of the tubes may, or may not, have the same cross section taken perpendicular to the longitudinal center axis of the tubes.

By means of the first retaining means, the deposit reducing elements may remain inside the tubes even if the exhaust gas pressure in the tubes is high.

Different designs of the first retaining means are possible. As an example, the first retaining means may comprise means, such as a perforated plate, or one or more projections extending from an inside surface of the tube, partly closing or blocking the outlet of the tube. As another example, the first retaining means may comprise one or more thin bars extending across the outlet. The outlet must not be blocked completely to allow escape of the exhaust gas. According to one embodiment of the invention, said first retaining means comprises at least one cavity extending through a wall of the second section of said respective one of the tubes for releasing the exhaust gas. When the deposit reducing element reaches said at least one cavity, the exhaust gas may escape there through instead of pushing the deposit reducing element further towards the tube outlet. This embodiment may enable a material effective boiler and retrofitting of existing boilers.

Different designs of the cavities are possible. As an example, the cavities may be formed as holes through the tubes. According to one embodiment said at least one cavity extends from the outlet towards the inlet of said respective one of the tubes. Designed like that, the cavities form recesses extending from the very tube outlets and a distance along the second section of the tubes.

The boiler may be so constructed that the deposit reducing elements are arranged to move within only the second section of said respective one of the tubes. Such an embodiment may improve the accessibility of the deposit reducing elements, which may be advantageous in connection with maintenance of the boiler. As an example, such an embodiment may be advantageous for a boiler comprising a manifold connecting some or all of the exhaust gas tube inlets, which manifold could make deposit reducing elements arranged in the first portions of the tubes inaccessible.

The tubes containing the deposit reducing elements may include second retaining means for preventing the deposit reducing element from leaving the second section of the tube. Thereby, the deposit reducing element can be prevented from entering the first section of the tube.

Different designs of the second retaining means are possible. As an example, the second retaining means may comprise means partly closing or blocking the passage between the first and second tube sections, such as one or more thin bars extending across the passage, or one or more projections projecting from the inside surface of the tubes towards the longitudinal center axis of the tubes. The passage must not be blocked completely to allow exhaust gas passing through. According to one embodiment of the invention, the inner periphery of the first section of the tube is smaller than the inner periphery of the second section of the tube. Further, the second retaining means comprises an annular edge of the first section of the tube. This embodiment enables a mechanically straightforward construction of the inventive boiler.

The boiler may be such that an outer periphery of each of the deposit reducing elements and an inner periphery of at least a part of said respective one of the tubes are at least partly uniform. By uniform peripheries is meant peripheries having the same shape or form but not necessarily the same size. As an example, the outer and inner peripheries of the deposit reducing elements and the tubes, respectively, may be circular as seen from the inlet or outlet of the tubes and when the tubes are closed. According to this embodiment, the design of the deposit reducing elements corresponds to the design of the tubes. If the outer periphery of the deposit reducing elements and the inner periphery of the tubes are uniform, at least a portion of the inside surface of the tubes may be cleaned all the way around the longitudinal center axis of the tubes.

The deposit reducing elements may alternatively be arranged to move within the first and second sections of said respective one of the tubes. Thereby, automatic cleaning of both the first and second tube sections is enabled.

The tubes containing the deposit reducing elements may comprise third retaining means for preventing the deposit reducing elements from leaving the tubes when the deposit reducing elements have a cleaning orientation, and for allowing the deposit reducing elements to be removed from the tubes when the deposit reducing elements are dislocated from their cleaning orientation. Removal of the deposit reducing elements may be required in connection with manual cleaning or maintenance of the boiler. This embodiment may enable easy removal of the deposit reducing elements by simply dislocating them from their cleaning orientation.

Different designs of the third retaining means are possible. As an example, the third retaining means may be formed by a locally decreased inner periphery of the tube or comprise means partly closing or blocking the inlet of the tube. The inlet must not be blocked completely to allow reception of exhaust gas into the tube. As an example, the third retaining means may comprise one or more projections projecting from the inside surface of the tubes towards the longitudinal center axis of the tubes. As another example, the third retaining means may comprise one or more thin bars extending across the inlet.

Still other objectives, features, aspects and advantages of the invention will appear from the following detailed description as well as from the drawings.

### Brief description of the drawings

The invention will now be described in more detail with reference to the appended schematic drawings, in which
Fig. 1 is a schematic top view of a boiler,
Fig. 2 is a schematic cross section of the boiler in Fig. 1 taken along line B-B,
Fig. 3 is a schematic cross section of some tubes of the boiler illustrated in Fig. 1,
Fig. 4 is a schematic cross section of some tubes of the boiler illustrated in Fig. 1 according to an alternative embodiment,
Fig. 5a is a schematic side view of a deposit reducing element,
Fig. 5b is a schematic top view of a deposit reducing element,
Fig. 6 and 7 are graphs illustrating how a boiler according to yet another alternative embodiment could be designed,
Fig. 8 is a schematic side view of a boiler according to yet another alternative embodiment,
Fig. 9 is a schematic top view of the boiler in Fig. 8, and
Fig. 10 is a schematic perspective view of the boiler in Fig. 8.

### Detailed description

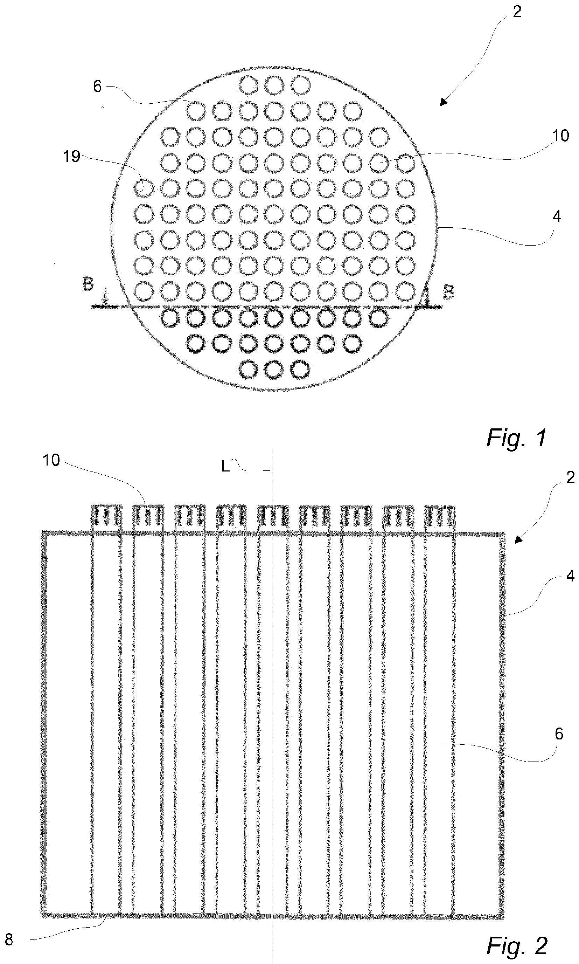

In Figs. 1 and 2 a boiler 2 is illustrated. The boiler 2 is arranged after an oil-fired burner (not illustrated). The boiler 2 comprises a vessel 4 arranged to house water and a first number of tubes or pipes 6 extending essentially parallel to each other along a respective longitudinal center axis L. During operation of the boiler 2, the exhaust gas, which has a temperature of 200-400 degrees C, is fed through at least some of the tubes 6. To this end, each of the tubes 6 has an exhaust gas inlet 8 and an exhaust gas outlet 10. Simultaneously, water is fed through the vessel to be heated by heat exchange with the hotter exhaust gas. The means for feeding water through the vessel is not illustrated in the figures and not further described herein.

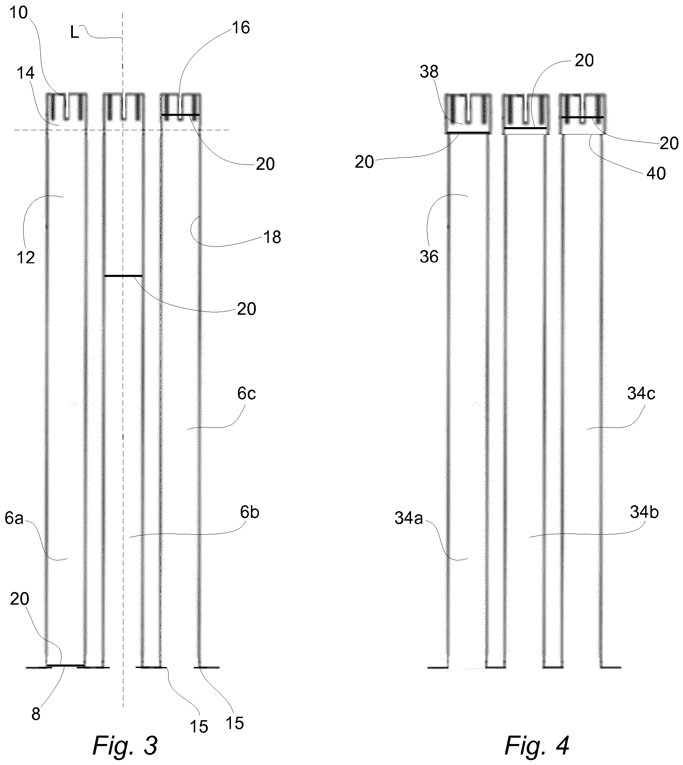

All the tubes 6 have the same design. Three of the tubes are illustrated separately in Fig. 3 and denoted 6a, 6b and 6c. Each of the tubes 6a, 6b and 6c comprises a first section 12 comprising the respective exhaust gas inlet 8 and a second section 14 comprising the respective exhaust gas outlet 10. The first and second sections 12 and 14, respectively, are integrally formed and the border between them is illustrated by the horizontal dashed line in Fig. 3. At a bottom end of the first section 12 of the tubes 6a, 6b and 6c, a respective pair of essentially opposing projections 15 is arranged, which projections 15 protrudes from a respective inside surface 18 of the tubes towards the longitudinal center axis L. The projections 15 form, what is herein referred to as, third retaining means, the function of which will be discussed below.

The second section 14 of the tubes 6a, 6b and 6c is "sliced" from the top so as to be provided with a plurality of through elongate cavities or open recesses 16 uniformly distributed, or equidistantly arranged, around the exhaust gas outlet 10. The recesses 16 extend essentially parallel to the longitudinal center axis L and from the outlet 10 along only a portion of the second section 14. The recesses 16 form, what is herein referred to as, first retaining means, the function of which will be discussed below. Outside the recesses 16 the tubes 6a, 6b and 6c have the same circular cross section along essentially their entire longitudinal extension.

When the exhaust gas is fed through the tubes 6, soot may be deposited on the respective inside surface 18 of the tubes. The inside surface 18 defines an inner periphery 19 (Fig. 1) of each of the tubes 6. As discussed by way of introduction, such deposits may cause a reduced thermal efficiency of the boiler and an increased fuel consumption of the burner. Therefore, it is desirable to prevent, as much as possible, the formation of such deposits. Further, removal of still formed deposits is desired. To this end, the boiler further comprises a second number of deposit reducing elements 20 (Fig. 3). Each of the deposit reducing elements 20 is arranged in a respective one of tubes 6. The number of deposit reducing elements 20 is less than the number of tubes 6 which means that only a majority of the tubes 6 contain a deposit reducing element 20. All of the tubes 6a, 6b and 6c contain a respective one of the deposit reducing elements 20.

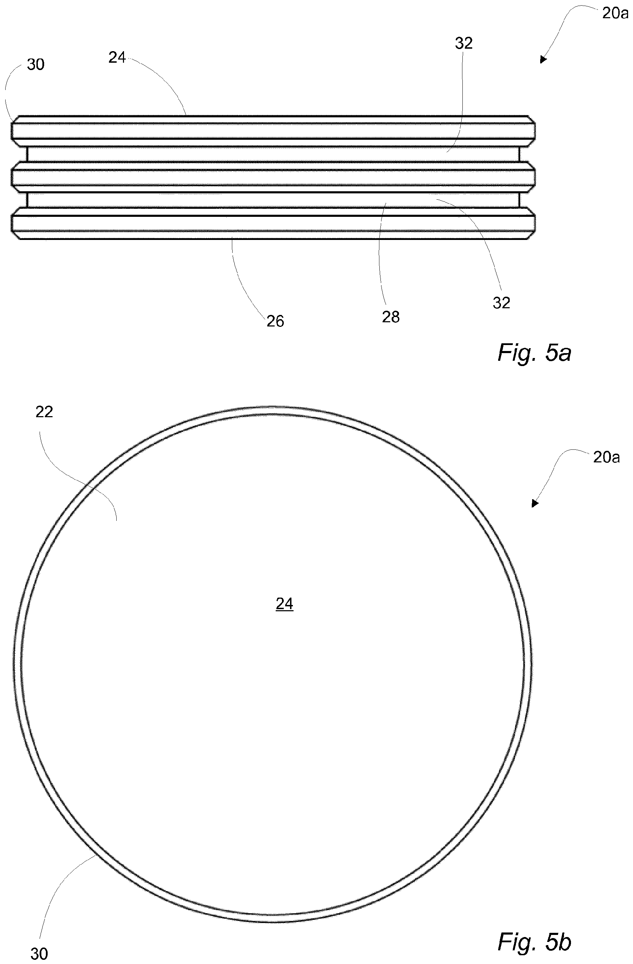

All the deposit reducing elements 20 have the same design. One of the deposit reducing elements 20 is illustrated separately in Figs. 5a and 5b and denoted 20a. The deposit reducing element 20a comprises a circular disc 22 having an upper plane surface 24 and a lower plane surface 26 which are essentially parallel. A peripheral surface 28 extending between the upper plane surface 24 and the lower plane surface 26 defines an outer periphery 30 of the deposit reducing element 20a. As is clear from Fig. 5a, the peripheral surface 28 comprises two parallel annular grooves 32 extending essentially parallel to the upper and lower plane surfaces 24 and 26.

Each of the deposit reducing elements 20 is arranged to move inside a respective one of the tubes 6, along the longitudinal center axis L thereof, and with its upper and lower plane surfaces 24 and 26 arranged essentially perpendicular to the longitudinal center axis L of the tube. Arranged like this, the deposit reducing elements have a cleaning orientation. When the deposit reducing elements 20 move through the tubes they are arranged to scrape off any soot deposits on the inside wall 18 of the tubes. To this end, the diameter of the discs 22, which is defined by their outer periphery 30, is just slightly smaller than the inner diameter of the tubes 6, which is defined by their inner periphery 19. The annular grooves 32 in the peripheral surface 28 of the deposit reducing elements 20 reduce the friction to facilitate the movement of the deposit reducing elements 20 through the tubes 6.

When the boiler 2 is ready for operation, all the deposit reducing elements 20 are arranged, in their cleaning orientation, at the bottom end of the first section 12 of the tubes 6 (also referred to herein as default position) where the projections 15 prevent them from leaving the tubes 6. Arranged like this, the deposit reducing elements 20 close the respective tubes 6. When the burner is started, it starts producing exhaust gas which is fed to the inlets 8 of the tubes 6 where it pushes against the deposit reducing elements 20. At a very low burner load, the exhaust gas pressure may be low enough so as to not cause any movement of any one of the deposit reducing elements 20. At such a very low burner load, all exhaust gas may escape through the tubes 6 not containing one of the deposit reducing elements 20. At a somewhat higher burner load, the exhaust gas pressure may be high enough so as to move some of the deposit reducing elements 20 to the second section 14 of the tubes 6. These deposit reducing elements are pushed upwards by the exhaust gas until they reach the recesses 16 and allow the exhaust gas to escape therethrough. Thereby, the deposit reducing elements 20 open the respective tubes. When the exhaust gas can leave the tubes 6 through the recesses 16, it does not push the deposit reducing elements 20 further upwards. Thus, the recesses 16 prevent the deposit reducing elements 20 from leaving the tubes 20. The higher the burner load and thus the total exhaust gas pressure is, the more deposit reducing elements 20 are moved upwards. When the burner load is reduced/the burner is shut off, some/all of the deposit reducing elements returns to the bottom end of the first section 12 of the tubes 6.

Since some of the tubes 6 will be closed by the deposit reducing elements 20 depending on the burner load, the exhaust gas velocity in the open tubes will be relatively high. A high exhaust gas velocity through a tube decreases the formation of soot deposits inside the tube. Nevertheless, the boiler 2 provides for removal of deposits still formed inside the tubes 6. During their movement up and down in the tubes 6, the deposit reducing elements 20 scrape soot deposits off the inside surfaces 18 of the tubes 6 so as to automatically clean them. Fig. 3 illustrates three different positions of the deposit reducing elements 20, the tubes 6a and 6b being closed and the tube 6c being open. When necessary or suitable, the tubes 6 may be manually cleaned when the boiler 2 is not operated.

As mentioned above, the projections 15 prevent the deposit reducing elements 20, when having their cleaning orientation, from leaving the tubes 6. Should it be necessary, for example to enable maintenance of the boiler, to remove the deposit reducing elements from the tubes, the deposit reducing elements may be turned or tilted, i.e. dislocated from their cleaning orientation, to be released from the projections 15 and then taken out of the tubes.

In the above described boiler 2, the deposit reducing elements 20 are arranged to move within both the first and the second section 12, 14 of the tubes 6. Fig. 4 illustrates tubes 34 denoted 34a, 34b and 34c and the disc shaped deposit reducing elements 20 of an alternative embodiment of the boiler 2. The boiler 2 according to the alternative embodiment is very similar to the above described boiler 2 and hereinafter the differing features will be focused on.

Each of the tubes 34a, 34b and 34c comprises a first section 36 and a second section 38 welded, brazed or glued together. The first and second tube sections 36, 38 have the same wall thickness but the inner diameter of the first tube section is smaller than the inner diameter of the second tube section. Thus, an annular edge 40 of the first section of each of the tubes 34 forms, what is herein referred to as, second retaining means, the function of which will be discussed below. The tubes 34 comprises no third retaining means like the above projections 15.

The deposit reducing elements 20 are arranged to move only within the second sections 38 of the tubes 34a, 34b and 34c to open or close the tubes 34a, 34b and 34c. To this end, the diameter of the deposit reducing elements 20 is slightly smaller than the inner diameter of the second section 38 of the tubes 34. Further, the diameter of the deposit reducing elements 20 is larger than the inner diameter of the first section 36 of the tubes 34. The annular edge 40 of the first tube sections 36 thus prevents the deposit reducing elements 20 from entering the first tube sections 36.

When the boiler 2 according to the alternative embodiment is ready for operation, all the deposit reducing elements 20 are arranged at the bottom end of the second section 38 of the tubes 34 (default position) where the annular edges 40 prevent them from leaving the second section. Arranged like this, the deposit reducing elements 20 close the respective tubes 34. When the burner is started, it starts producing exhaust gas which is fed to the inlets of the tubes 34 and into the tubes where it pushes against the deposit reducing elements 20. Depending on the burner load, some of the deposit reducing elements 20 may be pushed upwards by the exhaust gas until they reach the recesses and allow the exhaust gas to escape therethrough. Thereby, the deposit reducing elements 20 open the respective tubes. Fig. 4 illustrates three different positions of the deposit reducing elements 20, the tubes 34a and 34b being closed and the tube 34c being open. Since some of the tubes 34 will be closed by the deposit reducing elements 20 depending on the burner load, the exhaust gas velocity in the open tubes will be relatively high. A high exhaust gas velocity through a tube decreases the formation of soot deposits inside the tube. Further, as regards the closed tubes, there will be a positive net pressure at the respective exhaust gas outlet thereof. Consequently, the exhaust gas flow, and thus the soot deposit build-up, in the closed tubes will be limited. When necessary or suitable, the tubes 34 may be manually cleaned when the boiler 2 is not operated.

The deposit reducing elements 20 of the above described boilers are all similar. At a certain burner load, it is random which of the deposit reducing elements that are moved to open the corresponding tubes. Should the distribution of open tubes turn out not to be good, the deposit reducing elements could be given different characteristics to make them move in a certain order.

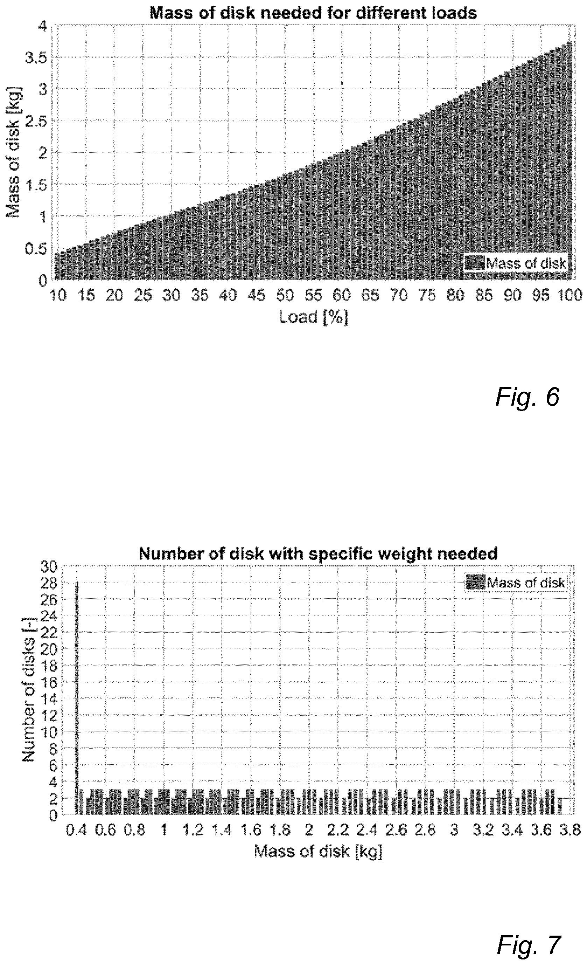

According to one embodiment of the inventive boiler, the deposit reducing elements have different weights such that a first subset of the deposit reducing elements have a first weight, a second subset of the deposit reducing elements have a second weight, a third subset of the deposit reducing elements have a third weight, etc., wherein the first weight < the second weight < the third weight. Then, a first exhaust gas pressure required for moving the deposit reducing elements of the first subset < a second exhaust gas pressure required for moving the deposit reducing elements of the second subset < a third exhaust gas pressure required for moving the deposit reducing elements of the third subset. This means that all the deposit reducing elements of the first subset will be moved before the deposit reducing elements of the second subset are moved, etc. Example: for a boiler comprising 300 tubes, connected to a burner producing 6500kg/h exhaust gas with an exhaust gas pressure of 62 mm in water column at 75% load, Fig. 6 illustrates the burner load required to move deposit reducing elements of different weights while Fig. 7 illustrates the number of deposit reducing elements of different weights. In such a boiler the number of deposit reducing elements may be, for example, 296 to 299 such that no deposit reducing element is arranged in between 1 and 4 of the tubes.

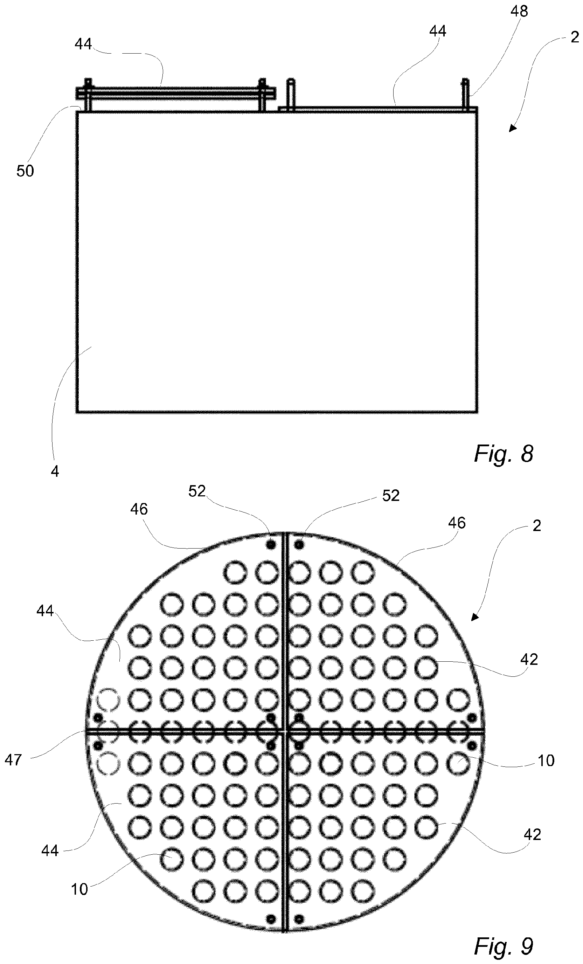

Figs. 8-10 illustrate a yet another alternative embodiment of the boiler 2 comprising a first number of tubes 42 and a second number of, here four, deposit reducing elements 44. The boiler 2 according to this embodiment is very similar to the above described boilers 2 and hereinafter the differing features will be focused on.

The tubes 42 comprise no first, second or third retaining means like the above recesses 16, annular edges 40 and projections 15, respectively, since the deposit reducing elements 44, unlike above, are arranged outside, instead of inside, the tubes 42. Each of the deposit reducing elements 44 is arranged to close, depending on the exhaust gas pressure in the tubes 42, a plurality of the tubes 42, some partly and some completely. Accordingly, since the vessel 4 of the boiler 2 is cylinder shaped and the tubes 42, which extend essentially parallel to a longitudinal center axis of the cylinder, are essentially uniformly distributed throughout the vessel 4, each of the four deposit reducing elements 44 comprises a disc 46 in the shape of a quarter of a circle. For the purpose of illustration only, the discs have been made transparent in Fig. 9. As is clear from Fig. 9, the tubes arranged in a center horizontal tube row are arranged to be partly closed by two of the deposit reducing elements 44. Because of a gap 47 between said two of the deposit reducing elements 44, the tubes arranged in the center horizontal tube row will always be partly open. Thereby, it may be ensured that no build-up of exhaust gas inside the boiler takes place. Thus, these constantly partly open tubes have the same function as the tubes lacking a deposit reducing element of the above described embodiments.

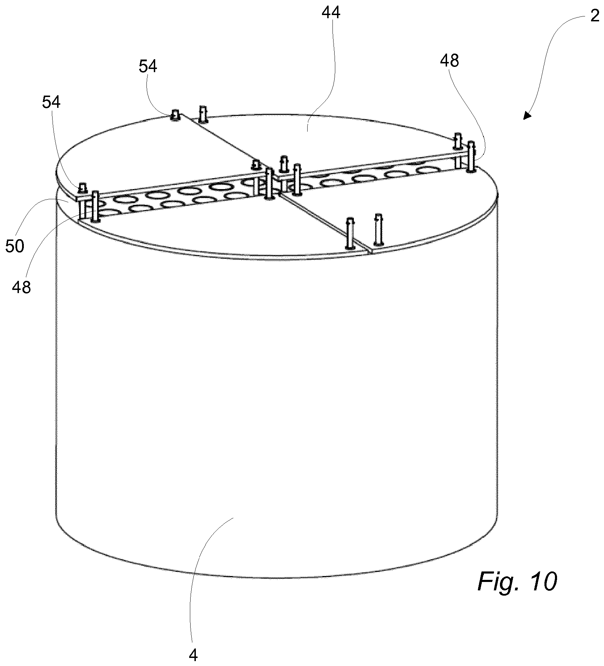

Each of the deposit reducing elements 44 is arranged to move in relation to the tubes 42 to open or close them, a deposit reducing elements 44 covering the outlet 10 of a tube 42 to close it. To guide the deposit reducing elements 44 during their movement in relation to the tubes 42, the boiler 2 further comprises a third number of guiding elements 48. Each of the guiding elements 48 is formed as a bar attached to a top wall 50 of the vessel 4 and extending through a respective hole 52 in the deposit reducing elements 44. There are three guiding elements 48, and thus holes 52, per deposit reducing element 44 arranged in a respective one of the corners of the deposit reducing element 44. The guiding elements 48 extend essentially parallel to each other and to the longitudinal center axes of the tubes 42, wherein the deposit reducing elements 44 move essentially parallel to the longitudinal center axes of the tubes. As is clear from especially Fig. 10, the guiding elements 48 each comprises two opposing projections 54 projecting essentially perpendicular to a longitudinal extension of the guiding elements so as to prevent the deposit reducing elements 44 from being disconnected from the guiding elements 48. As is schematically illustrated in Fig. 8 (by different deposit reducing element thicknesses), all the deposit reducing elements 44 have different weights so that they are moved or lifted at different exhaust gas pressures. In alternative embodiments, all or some of the deposit reducing elements 44 could all be similar and have the same weight.

When the boiler 2 according to Figs. 8-10 is ready for operation, all the deposit reducing elements 44 abut the top wall 50 of the vessel 4 and close the tubes 42 (default position). When the burner is started, it starts producing exhaust gas which is fed to the inlets (not illustrated) of the tubes 42 and into the tubes where it pushes against the deposit reducing elements 44. Depending on the burner load, some of the deposit reducing elements 44 may be lifted by the exhaust gas to open the corresponding tubes 42 and release the exhaust gas. As previously discussed, since some of the tubes 42 will be closed by the deposit reducing elements 44 depending on the burner load, the formation of deposits inside the tubes will be little.

In all of the above described embodiments the tubes and the deposit reducing elements could be made of stainless steel, carbon steel, aluminum or any other suitable material.

The above described embodiments of the present invention should only be seen as examples. A person skilled in the art realizes that the embodiments discussed can be varied and combined in a number of ways without deviating from the inventive conception.

As an example, the deposit reducing elements for arrangement inside the tubes need not be formed as solid circular discs but could have many different designs. As an example, the deposit reducing elements could each comprise two thinner steel plates with projecting bristles, in, for example, copper or brass, arranged in between these plates, which bristles could be arranged to brush the soot deposits off the inside surface of the tubes.

As another example, the deposit reducing elements for arrangement inside the tubes could be arranged to run on guiding elements in the form of bars extending through the tubes to keep them steady in the cleaning orientation. Such bars could extend through the deposit reducing elements.

Alternatively, to keep the deposit reducing elements for arrangement inside the tubes steady in the cleaning orientation, the deposit reducing elements could be "bowl-shaped", i.e. comprise a disc having an annular protruding edge projecting from the upper plane surface of the disc and extending along an outer periphery of the disc.

Further, the number of tubes and the number of deposit reducing elements could be the same such that there is one deposit reducing element per tube.

As another example, the tubes of the boiler could be designed like the tubes 34a, 34b and 34c illustrated in Fig. 4 but without the recesses or upper "slicing". Further, the disc shaped deposit reducing elements could have a diameter slightly smaller than the inside diameter of the first tube sections to allow the deposit reducing elements to move through the first tube sections. Then, when the deposit reducing elements reach the second tube sections, the exhaust gas could escape from the tubes by passing around the deposit reducing elements. The tube outlets could be closed by a perforated plate to keep the deposit reducing elements in the tubes.

The number of deposit reducing elements of the boiler in Figs. 8-10 could be more or less than four and/or the deposit reducing elements could have other shapes than the shape of circular sectors. Further, there could be more or less than three guiding elements per deposit reducing element, and/or the guiding element need not be arranged to extend through the deposit reducing elements. Also, the guiding elements need not be formed as bars along which the deposit reducing elements are arranged to slide. As an example, the guiding elements could instead comprise joints, hinges and/or springs.

The constantly partly open tubes of the boiler in Figs. 8-10 need not be the tubes arranged in the center horizontal tube row but could one or more of the other tubes.

As a final example, the boiler according to the invention could be used for heating, evaporating or superheating other media than water by means of exhaust gas from another source than an oil-fired burner, e.g. a diesel engine so as to function as a waste heat recovery boiler.

It should be stressed that a description of details not relevant to the present invention has been omitted and that the figures are just schematic and not drawn according to scale. It should also be said that some of the figures have been more simplified than others. Therefore, some components may be illustrated in one figure but left out in another figure. Finally, as used herein, the prefixes "first", "second", "top", "bottom", "upper", "lower", "horizontal", "vertical" etc. are used only to distinguish between different components and pose no requirements as regards relative positioning or orientation.

## Claims

1. A boiler (2) comprising a first number of tubes (6, 34, 42) for conveying exhaust gas, each of the tubes (6, 34, 42) comprising an inlet (8) for receiving the exhaust gas and an outlet (10) for discharging the exhaust gas and each of the tubes defining a respective longitudinal center axis (L), **characterized in** further comprising a second number of deposit reducing elements (20, 44), each of the deposit reducing elements (20, 44) being arranged to close at least one of the tubes (6, 34, 42) and prevent passage of exhaust gas through said at least one of the tubes, or be moved, by a sufficiently high exhaust gas pressure in said at least one of the tubes, to open said at least one of the tubes and allow passage of exhaust gas having a sufficiently high exhaust gas pressure through said at least one of the tubes, to increase an exhaust gas velocity in the open tubes and thereby reduce formation of deposits inside the tubes.

2. A boiler (2) according to claim 1, wherein a first subset of the deposit reducing elements containing at least one of the deposit reducing elements (20, 44) differ from a second subset of the deposit reducing elements containing at least one of the deposit reducing elements (20, 44) such that a first exhaust gas pressure required for moving said at least one of the deposit reducing elements (20, 44) of the first subset is less than a second exhaust gas pressure required for moving said at least one of the deposit reducing elements (20, 44) of the second subset.

3. A boiler (2) according to claim 2, wherein a weight of said at least one of the deposit reducing elements (20, 44) in the first subset is less than a weight of said at least one of the deposit reducing elements (20, 44) in the second subset.

4. A boiler (2) according to any of the preceding claims, wherein said first number of tubes (6, 34, 42) is larger than said second number of deposit reducing elements (20, 44).

5. A boiler (2) according to any of the preceding claims, wherein each of the deposit reducing elements (20, 44) includes a disc (22, 46) comprising two opposing plane surfaces (24, 26) arranged to extend essentially perpendicular to the longitudinal center axis (L) of said at least one of the tubes (6, 34, 42) when the deposit reducing element closes said at least one of the tubes.

6. A boiler (2) according to any of the preceding claims, further comprising a third number of guiding elements (48) arranged to engage with said deposit reducing elements (20, 44) to control their movement in relation to said tubes (6, 34, 42).

7. A boiler (2) according to any of the preceding claims, wherein each of said deposit reducing elements (44) is arranged to at least partly cover the respective outlet (10) of said at least one of the tubes (42) to close said at least one of the tubes (42).

8. A boiler (2) according to any one of claims 1-6, wherein each of the deposit reducing elements (20) is arranged in a respective one of the tubes (6, 34) and arranged to be moved along the longitudinal center axis (L) of said respective one of the tubes (6, 34) to open or close the tube.

9. A boiler (2) according to claim 8, wherein each of the deposit reducing elements (20) is arranged to scrape off deposits from an inside surface (18) of said respective one of the tubes (6, 34) when being moved along the longitudinal center axis (L) of said respective one of the tubes (6, 34).

10. A boiler (2) according to any of claims 8-9, wherein the tubes (6, 34) containing the deposit reducing elements (20) comprises a first section (12, 36) including the inlet (8) for receiving the exhaust gas and a second section (14, 38) including the outlet (10) for discharging the exhaust gas, wherein the second section (14, 38) further includes first retaining means for preventing the deposit reducing element (20) from leaving the tube (6, 34).

11. A boiler (2) according to claim 10, wherein said first retaining means comprises at least one cavity (16) extending through a wall of the second section (14, 38) of said respective one of the tubes (6, 34) for releasing the exhaust gas.

12. A boiler (2) according to any of claims 10-11, wherein the deposit reducing elements (20) are arranged to move within only the second section (38) of said respective one of the tubes (34).

13. A boiler (2) according to claim 12, wherein the tubes (34) containing the deposit reducing elements (20) includes second retaining means for preventing the deposit reducing element (20) from leaving the second section (38) of the tube (34).

14. A boiler (2) according to claim 13, wherein the inner periphery (19) of the first section (36) of the tube (34) is smaller than the inner periphery (19) of the second section (38) of the tube (34), and wherein the second retaining means comprises an annular edge (40) of the first section (36) of the tube (34).

15. A boiler (2) according to any of claims 8-14, wherein an outer periphery (30) of each of the deposit reducing elements (20) and an inner periphery (19) of at least a part of said respective one of the tubes (6, 34) are at least partly uniform.

## Patentansprüche

1. Kessel (2), der eine erste Anzahl von Röhren (6, 34, 42) zum Befördern von Abgas umfasst, wobei jede der Röhren (6, 34, 42) einen Einlass (8) zum Aufnehmen des Abgases und einen Auslass (10) zum Abgeben des Abgases umfasst und jede der Röhren eine jeweilige Längsmittelachse (L) definiert,
**dadurch gekennzeichnet, dass** er ferner eine zweite Anzahl von Ablagerungsverringerungselementen (20, 44) umfasst, wobei jedes der Ablagerungsverringerungselemente (20, 44) dafür angeordnet ist, mindestens eine der Röhren (6, 34, 42) zu schließen und einen Durchgang von Abgas durch die mindestens eine der Röhren zu verhindern oder, durch einen ausreichend hohen Abgasdruck in der mindestens einen der Röhren, bewegt zu werden, um die mindestens eine der Röhren zu öffnen und einen Durchgang von Abgas, das einen ausreichend hohen Abgasdruck aufweist, durch die mindestens eine der Röhren zu ermöglichen, um eine Abgasgeschwindigkeit in den offenen Röhren zu steigern und dadurch die Bildung von Ablagerungen innerhalb der Röhren zu verringern.

2. Kessel (2) nach Anspruch 1, wobei sich eine erste Teilmenge der Ablagerungsverringerungselemente, die mindestens eines der Ablagerungsverringerungselemente (20, 44) enthält, von einer zweiten Teilmenge der Ablagerungsverringerungselemente, die mindestens eines der Ablagerungsverringerungselemente (20, 44) enthält, derart unterscheidet, dass ein erster Abgasdruck, der erforderlich ist, um das mindestens eine der Ablagerungsverringerungselemente (20, 44) der ersten Teilmenge zu bewegen, geringer ist als ein zweiter Abgasdruck, der erforderlich ist, um das mindestens eine der Ablagerungsverringerungselemente (20, 44) der zweiten Teilmenge zu bewegen.

3. Kessel (2) nach Anspruch 2, wobei ein Gewicht des mindestens einen der Ablagerungsverringerungselemente (20, 44) in der ersten Teilmenge geringer ist als ein Gewicht des mindestens einen der Ablagerungsverringerungselemente (20, 44) in der zweiten Teilmenge.

4. Kessel (2) nach einem der vorhergehenden Ansprüche, wobei die erste Anzahl von Röhren (6, 34, 42) größer ist als die zweite Anzahl von Ablagerungsverringerungselementen (20, 44).

5. Kessel (2) nach einem der vorhergehenden Ansprüche, wobei jedes der Ablagerungsverringerungselemente (20, 44) eine Scheibe (22, 46) einschließt, die zwei entgegengesetzte ebene Flächen (24, 26) umfasst, die so angeordnet sind, dass sie sich im Wesentlichen senkrecht zu der Längsmittelachse (L) der mindestens einen der Röhren (6, 34, 42) erstrecken, wenn das Ablagerungsverringerungselement die mindestens eine der Röhren schließt.

6. Kessel (2) nach einem der vorhergehenden Ansprüche, die ferner eine dritte Anzahl von Führungselementen (48) umfasst, die dafür angeordnet sind, mit den Ablagerungsverringerungselementen (20, 44) ineinanderzugreifen, um deren Bewegung im Verhältnis zu den Röhren (6, 34, 42) zu steuern.

7. Kessel (2) nach einem der vorhergehenden Ansprüche, wobei jedes der Ablagerungsverringerungselemente (44) dafür angeordnet ist, den jeweiligen Auslass (10) der mindestens einen der Röhren (42) mindestens teilweise abzudecken, um die mindestens eine der Röhren (42) zu schließen.

8. Kessel (2) nach einem der Ansprüche 1 bis 6, wobei jedes der Ablagerungsverringerungselemente (20) in einer jeweiligen der Röhren (6, 34) angeordnet und dafür angeordnet ist, entlang der Längsmittelachse (L) der jeweiligen der Röhren (6, 34) bewegt zu werden, um die Röhre zu öffnen oder zu schließen.

9. Kessel (2) nach Anspruch 8, wobei jedes der Ablagerungsverringerungselemente (20) dafür angeordnet ist, Ablagerungen von einer Innenfläche (18) der jeweiligen einen der Röhren (6, 34) abzukratzen, wenn es entlang der Längsmittelachse (L) der jeweiligen einen der Röhren (6, 34) bewegt wird.

10. Kessel (2) nach einem der Ansprüche 8 bis 9, wobei die Röhren (6, 34), welche die Ablagerungsverringerungselemente (20) enthalten, eine erste Sektion (12, 36), die den Einlass (8) zum Aufnehmen des Abgases einschließt, und eine zweite Sektion (14, 38), die den Auslass (10) zum Abgeben des Abgases einschließt, umfassen, wobei die zweite Sektion (14, 38) ferner ein erstes Rückhaltemittel zum Verhindern, dass das Ablagerungsverringerungselement (20) die Röhre (6, 34) verlässt, einschließt.

11. Kessel (2) nach Anspruch 10, wobei das erste Rückhaltemittel mindestens einen Hohlraum (16) einschließt, der sich durch eine Wand der zweiten Sektion (14, 38) der jeweiligen einen der Röhren (6, 34) zum Abgeben des Abgases erstreckt.

12. Kessel (2) nach einem der Ansprüche 10 bis 11, wobei die Ablagerungsverringerungselemente (20) dafür angeordnet sind, sich innerhalb nur der zweiten Sektion (38) der jeweiligen einen der Röhren (34) zu bewegen.

13. Kessel (2) nach Anspruch 12, wobei die Röhren (34), welche die Ablagerungsverringerungselemente (20) enthalten, ein zweites Rückhaltemittel zum Verhindern, dass das Ablagerungsverringerungselement (20) die zweite Sektion (38) der Röhre (34) verlässt, einschließen.

14. Kessel (2) nach Anspruch 13, wobei der Innenumfang (19) der ersten Sektion (36) der Röhre (34) kleiner ist als der Innenumfang (19) der zweiten Sektion (38) der Röhre (34) und wobei das zweite Rückhaltemittel eine ringförmige Kante (40) der ersten Sektion (36) der Röhre (34) umfasst.

15. Kessel (2) nach einem der Ansprüche 8 bis 14, wobei ein Außenumfang (30) jedes der Ablagerungsverringerungselemente (20) und ein Innenumfang (19) mindestens eines Teils der jeweiligen einen der Röhren (6, 34) mindestens teilweise gleich sind.

## Revendications

1. Chaudière (2) comprenant un premier nombre de tubes (6, 34, 42) pour acheminer du gaz d'échappement, chacun des tubes (6, 34, 42) comprenant une admission (8) pour recevoir le gaz d'échappement et une sortie (10) pour évacuer le gaz d'échappement et chacun des tubes définissant un axe central longitudinal respectif (L),
**caractérisée en ce qu'**elle comprend en outre un deuxième nombre d'éléments de réduction de dépôt (20, 44), chacun des éléments de réduction de dépôt (20, 44) étant agencé pour fermer au moins un des tubes (6, 34, 42) et empêcher un passage du gaz d'échappement à travers ledit au moins un des tubes, ou être déplacé, par une pression de gaz d'échappement suffisamment haute dans ledit au moins un des tubes, pour ouvrir ledit au moins un des tubes et permettre un passage du gaz d'échappement ayant une pression de gaz suffisamment haute à travers ledit au moins un des tubes, pour augmenter une vitesse de gaz d'échappement dans les tubes ouverts et réduire par ce moyen la formation de dépôts à l'intérieur des tubes.

2. Chaudière (2) selon la revendication 1, dans laquelle un premier sous-ensemble des éléments de réduction de dépôt contenant au moins l'un des éléments de réduction de dépôt (20, 44) diffère d'un deuxième sous-ensemble des éléments de réduction de dépôt contenant au moins l'un des éléments de réduction de dépôt (20, 44) de telle manière qu'une première pression de gaz d'échappement requise pour déplacer ledit au moins un des éléments de réduction de dépôt (20, 44) du premier sous-ensemble est inférieure à une deuxième pression de gaz d'échappement requise pour déplacer le dit au moins un des éléments de réduction de dépôt (20, 44) du deuxième sous-ensemble.

3. Chaudière (2) selon la revendication 2, dans laquelle un poids dudit au moins un des éléments de réduction de dépôt (20, 44) dans le premier sous-ensemble est inférieur à un poids dudit au moins un des éléments de réduction de dépôt (20, 44) dans le deuxième sous-ensemble.

4. Chaudière (2) selon l'une quelconque des revendications précédentes, dans laquelle ledit premier nombre de tubes (6, 34, 42) est supérieur audit deuxième nombre d'éléments de réduction de dépôt (20, 44).

5. Chaudière (2) selon l'une quelconque des revendications précédentes, dans laquelle chacun des éléments de réduction de dépôt (20, 44) inclut un disque (22, 46) comprenant deux surfaces planes opposées (24, 46) disposées de façon à s'étendre sensiblement perpendiculairement à l'axe central longitudinal (L) dudit au moins un des tubes (6, 34, 42) lorsque l'élément de réduction de dépôt ferme ledit au moins un des tubes.

6. Chaudière (2) selon l'une quelconque des revendications précédentes, comprenant en outre un troisième nombre d'éléments de guidage (48) disposés de manière à mettre en prise lesdits éléments de réduction de dépôt (20, 44) pour contrôler leur déplacement par rapport auxdits tubes (6, 34, 42).

7. Chaudière (2) selon l'une quelconque des revendications précédentes, dans laquelle chacun desdits éléments de réduction de dépôt (44) est disposé de façon à recouvrir au moins en partie la sortie respective (10) dudit au moins un des tubes (42) pour fermer ledit au moins un des tubes (42).

8. Chaudière (2) selon l'une quelconque des revendications 1 à 6, dans laquelle chacun des éléments de réduction de dépôt (20) est agencé dans un tube respectif des tubes (6, 34) et agencé pour être déplacé le long de l'axe central longitudinal (L) dudit tube respectif des tubes (6, 34) pour ouvrir ou de fermer le tube.

9. Chaudière (2) selon la revendication 8, dans laquelle chacun des éléments de réduction de dépôt (20) est agencé de manière à racler des dépôts à partir d'une surface intérieure (18) d'undit tube respectif des tubes (6, 34) lorsqu'il est déplacé le long de l'axe central longitudinal (L) dudit tube respectif des tubes (6, 34).

10. Chaudière (2) selon l'une des revendications 8 à 9, dans laquelle les tubes (6, 34) contenant les éléments de réduction de dépôt (20) comprennent une première section (12, 36) incluant l'admission (8) servant à recevoir le gaz d'échappement et une deuxième section (14, 38) incluant la sortie (10) servant à évacuer le gaz d'échappement, dans laquelle la deuxième section (14, 38) inclut en outre un premier moyen de retenue pour empêcher l'élément de réduction de dépôt (20) de sortir du tube (6, 34).

11. Chaudière (2) selon la revendication 10, dans laquelle ledit premier moyen de retenue comprend au moins une cavité (16) s'étendant à travers une paroi de la deuxième section (14, 38) dudit un tube respectif des tubes (6, 34) pour libérer le gaz d'échappement.

12. Chaudière (2) selon l'une quelconque des revendications 10 à 11, dans laquelle les éléments de réduction de dépôt (20) sont agencés de manière à se déplacer uniquement à l'intérieur de la deuxième section (38) dudit un tube respectif des tubes (34).

13. Chaudière (2) selon la revendication 12, dans laquelle les tubes (34) contenant les éléments de réduction de dépôt (20) incluent un deuxième moyen de retenue pour empêcher l'élément de réduction de dépôt (20) de sortir de la deuxième section (38) du tube (34).

14. Chaudière (2) selon la revendication 13, dans laquelle la périphérie intérieure (19) de la première section (36) du tube (34) est inférieure à la périphérie intérieure (19) de la deuxième section (38) du tube (34), et dans laquelle le deuxième moyen de retenue comprend un bord annulaire (40) de la première section (36) du tube (34).

15. Chaudière (2) selon l'une quelconque des revendications 8 à 14, dans laquelle une périphérie extérieure (30) de chacun des éléments de réduction de dépôt (20) et une périphérie intérieure (19) d'au moins une partie dudit un tube respectif des tubes (6, 34) sont au moins en partie uniformes.
